# EUROPÄISCHE PATENTSCHRIFT

(11) **EP 1 201 082 B1**
(45) Veröffentlichungstag und Bekanntmachung des Hinweises auf die Patenterteilung: **03.09.2003**
(21) Anmeldenummer: 00918645.3
(22) Anmeldetag: 28.04.2000
(51) Int. Cl.: H04N 7/14, H04N 7/15

(54) **VERFAHREN UND SYSTEM FÜR VIDEOKONFERENZEN**
METHOD AND SYSTEM FOR VIDEO CONFERENCES
PROCEDE ET SYSTEME DE VIDEOCONFERENCE

(43) Veröffentlichungstag der Anmeldung: 02.05.2002
(73) Patentinhaber: Swisscom Mobile AG, 3050 Bern (CH)
(72) Erfinder: LAUPER, Eric, CH-3014 Bern (CH); HERRMANN, Beat, CH-3006 Bern (CH)
(74) Vertreter: BOVARD AG - Patentanwälte
(86) Internationale Anmeldenummer: CH0000236
(87) Internationale Veröffentlichungsnummer: WO01084838

(56) Entgegenhaltungen:
- EP-A- 0 865 207
- WO-A-99/12351
- US-A- 5 500 671
- US-A- 5 703 637

## Beschreibung

Die vorliegende Erfindung betrifft ein Verfahren und System für Videokonferenzen mit mindestens drei verschiedenen Videokonferenzteilnehmerstellen, welche miteinander kommunizieren, wobei Multimediadaten über ein Telekommunikationsnetz übertragen werden, welche mindestens Teilnehmerbilddaten und/oder Teilnehmertondaten umfassen, und jeder Teilnehmer die Teilnehmerbilddaten der anderen Teilnehmer auf einem Wiedergabegerät, z.B. einem Display oder einem VRD (Virtual Retinal Display), gleichzeitig sichtbar angeordnet dargestellt erhält. Die Erfindung betrifft insbesondere Verfahren und Systeme, welche über Telekommunikationsnetze kommunizieren, die mindestens teilweise aus einem Mobilfunknetz bestehen.

Die schnelle Übertragung, der Empfang und das Anzeigen von Videobildern durch Video- und Fernsehapparate ist bekannt. Die Bilder besitzen üblicherweise eine Auflösung von mindestens 10x6 ppi (Pixel pro Inch) in genügend guter Farb- und Graustufenqualität. Für die Übertragung der gesamten Bildinformation ist eine Mindestbandbreite des Übertragungskanals von mehreren Megahertz Voraussetzung. Die Kosten solcher Systeme sind aber für bestimmte Anwendungen wie Videokonferenzsysteme für Geschäfts- und Privatgebrauch bei weitem zu hoch. Es ist bekannt, für die Übertragung von Videobildern Medien mit kleinerer Bandbreite, wie beispielsweise öffentliche Telekommunikationsnetze, zu benutzen. Die Übertragungsrate ist aber entsprechend tief für diese Medien. Für spezielle Anwendungen, wie "slow scan" Videosysteme kann eine solche beschränkte Bandbreite auch tatsächlich ausreichen. Beispiele dafür sind Sicherheits- und Überwachungssysteme, bei welchen eine hohe Bildwiederholungsrate bzw. hohe Auflösung nicht notwendig ist. Solche Systeme benutzen typischerweise eine Auflösung von 128x128 Pixel für das ganze Bild, wobei nur 16 Farb- bzw. Graustufen verwendet werden. Videobilder mit höherer Qualität, z.B. mit 640x480 Pixel (europäische Norm: 620x576 Pixel, 8 bit Farbtiefe) und einer Farbtiefe von 64 Stufen, wie sie für Videokonferenzen üblich sind, können mit diesen Systemen aber nicht übertragen werden. Ein normales Videobild braucht etwa 2 Millionen Bits Information, also etwa 250 kByte, für Graustufenbilder. Bei Farbbildern steigt die Datenmenge gar auf 750 kByte. Die Datenübertragungsrate über öffentliche geschaltete Telefonnetze (PSTN: Public Switched Telephone Network) liegt heute typischerweise bei 57'000 bps (Bits pro Sekunde, für digitale Daten entspricht dies bauds) pro Linie im Analogbereich und bei 64'000 bps für ISDN, womit etwa 30 Sekunden bzw. 90 Sekunden gebraucht werden, um ein vollständiges Videobild von genügend guter Qualität zu übermitteln. Dies ist für die meisten Videokonferenzanwendungen bei weitem zu langsam. Aus diesem Grund werden die unbearbeiteten digitalen Videodaten mit verschiedensten Datenkompressionsalgorithmen komprimiert, um die Übermittlungszeit zu verkürzen. Doch auch sehr gute Kompressions- und Dekompressionsalgorithmen, mit einer Kompressionsrate von 1/20 bis 1/50, sind für viele Videokonferenzanwendungen ungenügend. Zudem sind Kompression und Dekompression im Normalfall zeitaufwendig und verbrauchen entsprechend Energie und Rechenleistung. Z.B. im Mobilfunkbereich kann gerade der letzte Faktor ebenfalls entscheidend sein. Dabei ist zu berücksichtigen, dass im Mobilfunkbereich anders als bei PSTN-Netzen die Verbindungsqualität, welche eine maximale Übertragungsrate zuliesse, nicht immer gegeben ist. Bei tieferen Übermittlungsraten als der maximal möglichen multipliziert sich die Übertragungszeit zudem entsprechend. Um eine weitere Datenkompression zu erhalten, finden sich im Stand der Technik mehrere Dokumente, die vorschlagen, nur einen bestimmten Ausschnitt eines aufgenommenen Bildes mit hoher Auflösung zu übertragen, während alle anderen Bildausschnitte mit tieferer Auflösung übertragen werden. Die Patentschriften US5703637 und US4513317 sind Beispiele, welche mit einem Eye Tracking System die Bewegung des Augapfels oder der Retina registrieren und diese Information dazu benutzen, nur einen kleinen Bereich des Bildes mit hoher Auflösung darzustellen. Diese Systeme nutzen die Eigenschaft des menschlichen Auges aus, dass nur ein kleiner Teil der Retina (genannt Fovea) hochauflösend ist, während der grosse übrige Teil eine geringe Auflösung besitzt. Der Stand der Technik besitzt jedoch mehrere Nachteile, u.a. den Nachteil, dass alle Teilnehmer den gleichen Videostandard benutzen müssen, um diese Bilder darstellen zu können. Es ist aber wünschenswert, dass Videokonferenzsysteme unabhängig vom Videostandard sind. Des weiteren besitzt die Fovea einen hochauflösenden Blickwinkel von nur 2°. Diese Tatsache wird vom Gehirn durch eine natürliche aber unvermeidliche und ständige Scanbewegung des Auges korrigiert. Das führt dazu, dass, wie gut die Blickrichtung und der hochauflösende Bildausschnitt auch übereinstimmen, dem Benutzer das Bild verschwommen mit einem kleinen scharfen Bildausschnitt im Blickzentrum erscheint. Dieser Nachteil kann mit dem gegenwärtigen Stand der Technik, falls überhaupt, nur aufwendig korrigiert werden.

Es ist eine Aufgabe dieser Erfindung, ein neues Verfahren und System für Videokonferenzen vorzuschlagen, welches die oben beschriebenen Nachteile nicht aufweist. Insbesondere sollen die Teilnehmerbliddaten von Videokonferenzen mit hoher Kompression übermittelt werden können.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mindestens drei Teilnehmer über Videokonferenzteilnehmerstellen eines Videokonferenzsystems miteinander kommunizieren, wobei Multimediadaten über ein Telekommunikationsnetz übertragen werden, welche mindestens Teilnehmerbilddaten und/oder Teilnehmertondaten umfassen, und jeder der Teilnehmer die Teilnehmerbilddaten der anderen Teilnehmer auf einem Wiedergabegerät, z.B. einem Display, der betreffenden Videokonferenzteilnehmerstelle gleichzeitig sichtbar angeordnet dargestellt erhält, dass die Blickrichtung der Teilnehmer jeweils von einem Eye Tracking System registriert und Eye Tracking Daten, die mindestens Angaben über die Blickrichtung umfassen, an eine Kommunikationseinheit der betreffenden Videokonferenzteilnehrnerstelle übertragen werden, und dass jeweils die Teilnehmerbilddaten desjenigen Teilnehmers mit voller Auflösung und Bildübertragungsrate über das Telekommunikationsnetz an die Kommunikationseinheit einer Videokonferenzteilnehmerstelle übermittelt werden, dessen Teilnehmerbilddaten auf dem Wiedergabegerät der letztgenannten Videokonferenzteilnehmerstelle in der momentanen Blickrichtung des Teilnehmers dieser Videokonferenzteilnehmerstelle dargestellt werden, während die Teilnehmerbilddaten der übrigen Teilnehmer in reduzierter Auflösung und/oder reduzierter Bildübertragungsrate übermittelt werden. Die Erfindung hat den Vorteil, dass die Komprimierung, d.h. die Reduzierung, der Teilnehmerbilddaten unabhängig vom benutzten Videostandard ist, da die Teilnehmerbilddaten eines Teilnehmers entweder reduziert oder in voller Auflösung übermittelt werden, ohne dass dafür eine komplizierte Unterteilung in Subframes wie im Stand der Technik stattfindet. Damit können beispielsweise die einzelnen Videobilder einer Videokonferenzschnittstelle erhalten bleiben. Die Einfachheit des Verfahrens bringt ebenfalls einen minimalen Verbrauch an Rechenleistung mit sich, was insbesondere bei Mobilfunkgeräten mit beschränkten Energiereserven, wichtig sein kann. Der Nachteil beim Stand der Technik, dass die Scanbewegung der Fovea korrigiert werden muss (wie z.B. US4513317), fällt bei dieser Erfindung weg, da sich die Scanbewegung im Normalfall auf den zu erkennenden Gegenstand bezieht. Der Eindruck eines scharfen Mittelpunktes mit unscharfer Umgebung entfällt. Der ganze logische Gegenstand, z.B. der Videokonferenzteilnehmer, wird scharf erkannt. Wandert der Blick zur nächsten logischen Einheit, d.h. den Teilnehmerbilddaten eines anderen Teilnehmers, werden diese als Ganzes scharf wahrgenommen.

In einer Ausführungsvariante wird die Bildübertragungsrate für diejenigen Teilnehmerbilddaten, welche nicht in der momentanen Blickrichtung des Teilnehmers dargestellt werden, gleich Null gesetzt. Diese Ausführungsvariante hat insbesondere den Vorteil, dass die Netzbelastung auf ein Minimum beschränkt wird. Gleichzeitig wird die benötigte Rechenleistung minimiert, die z.B. gebraucht wird um die Teilnehmerbilddaten zu dekomprimieren.

In einer weiteren Ausführungsvariante werden die Eye Tracking Daten sowie die Teilnehmerbilddaten an eine Zentraleinheit übermittelt, wobei die Zentraleinheit für jeden Teilnehmer gemäss den Angaben der Eye Tracking Daten des betreffenden Teilnehmers die Auflösung und/oder die Bildübertragungsrate der Teilnehmerbilddaten der anderen Teilnehmer bestimmt und die Teilnehmerbilddaten in dieser Auflösung und/oder Bildübertragungsrate an die Kommunikationseinheit des betreffenden Teilnehmers übermittelt. Diese Ausführungsvariante hat u.a. den Vorteil, dass bei grösserer Anzahl der Teilnehmer die Netzbelastung klein bleibt. Durch die zentrale Reduzierung der Teilnehmerbilddaten bleibt z.B. ebenfalls die Rechenleistung der einzelnen Videokonferenzteilnehmerstellen im Vergleich zu anderen Lösungen klein.

In einer weiteren Ausführungsvariante werden die Teilnehmerbilddaten an eine Zentraleinheit übermittelt und in einem Datenspeicher (das Speichern oder Puffern der Daten kann z.B. über einen Datenpuffer, einen Datenstream, eine Datenbank oder andersweitig realisiert sein) der Zentraleinheit abgespeichert, die Kommunikationseinheit eines Teilnehmers bestimmt gemäss den Angaben der Eye Tracking Daten des betreffenden Teilnehmers die Auflösung und/oder Bildübertragungsrate der Teilnehmerbilddaten der anderen Teilnehmer und diese Teilnehmerbilddaten werden von der Zentraleinheit in dieser Auflösung und/oder Bildübertragungsrate an die Kommunikationseinheit des betreffenden Teilnehmers übermittelt. Diese Ausführungsvariante hat dieselben Vorteile wie die vorhergehende Ausführungsvariante, setzt aber von der Zentraleinheit keine Rechenleistung zur Berechnung der darzustellenden Videobilder der einzelnen Teilnehmer voraus, da die Kommunikationseinheiten direkt auf die Teilnehmerbilddaten in der von ihnen bestimmten Auflösung und Bildübertragungsrate zugreifen. Ein anderer Vorteil ist, dass die Eye Tracking Daten nicht über das Netz übermittelt werden müssen.

In einer Ausführungsvariante werden die Teilnehmerbilddaten eines Teilnehmers jeweils in einem Datenspeicher der Kommunikationseinheit dieses Teilnehmers abgespeichert und die Kommunikationseinheit bestimmt gemäss den Angaben der Eye Tracking Daten dieses Teilnehmers die Auflösung und/oder die Bildübertragungsrate der Teilnehmerbilddaten der anderen Teilnehmer, wobei die letztgenannten Teilnehmerbilddaten von den Kommunikationseinheiten der anderen Teilnehmer in dieser Auflösung und/oder Bildübertragungsrate an die Kommunikationseinheit des betreffenden Teilnehmers übermittelt werden. Diese Ausführungsvariante hat u.a. den Vorteil, dass sie ohne Zentraleinheit auskommt. Teilnehmer des Telekommunikationsnetzes können sich direkt über das Telekommunikationsnetz zusammenschliessen, ohne weitere Einheiten ausser ihrer Videokonferenzteilnehmerstellen beanspruchen zu müssen.

In einer weiteren Ausführungsvariante ist mindestens eine Videokonferenzteilnehmerstelle über ein Mobilfunknetz mit dem Telekommunikationsnetz verbunden. Das Telekommunikationsnetz kann beispielsweise ein Festnetz, wie ein LAN (Local Area Network) oder WAN (Wide Area Network), das öffentliche geschaltete Telefonnetz (PSTN (Public Switched Telephone Network) und/oder ISDN (Integrated Services Digital Network)), das Internet oder ein anderes Kommunikationsnetz, insbesondere ein Mobilfunknetz umfassen.

In einer anderen Ausführungsvariante verwendet die Kommunikationseinheit Bildanalyse- und Formrekonstruktionsalgorithmen um die Teilnehmerbilddaten, welche mit reduzierter Auflösung übermittelt wurden, darzustellen. Einer der Vorteile dieser Ausführungsvariante ist, dass trotz reduzierter Auflösung der übermittelten Bilder, die Bilder durch die Bildsynthese der Formrekonstruktionsalgorithmen wieder hergestellt werden können und in höherer Auflösung als die Übermittelten dargestellt werden können.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende einzige beigelegte Figur illustriert:
Figur 1 zeigt ein Blockdiagramm, welches schematisch eine Ausführungsvariante eines Videokonferenzsystems illustriert, bei welchem Kommunikationseinheiten 20 von Videokonferenzteilnehmerstellen über eine Zentraleinheit 30 auf Teilnehmerbilddaten und Teilnehmertondaten zugreifen.
Figur 2 zeigt ein Blockdiagramm, welches schematisch eine weitere Ausführungsvariante eines Videokonferenzsystems illustriert, bei welchem Kommunikationseinheiten 20 von Videokonferenzteilnehmerstellen über Datenspeicher 26 der anderen Kommunikationeinheiten 20 auf Teilnehmerbilddaten und Teilnehmertondaten zugreifen.

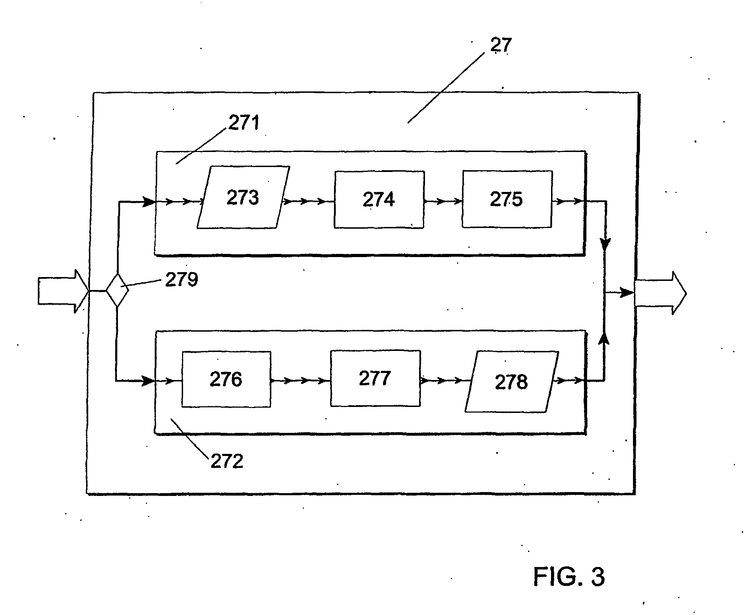

Figur 3 zeigt ein Flussdiagramm, welches schematisch die Schritte für eine Ausführungsvariante eines Codingmoduls 27 illustriert, welches Codingmodul 27 u.a. die Komprimier- und Dekomprimierfunktionen sowie die Verschlüsselungs- und Entschlüsselungsfunktionen umfasst.

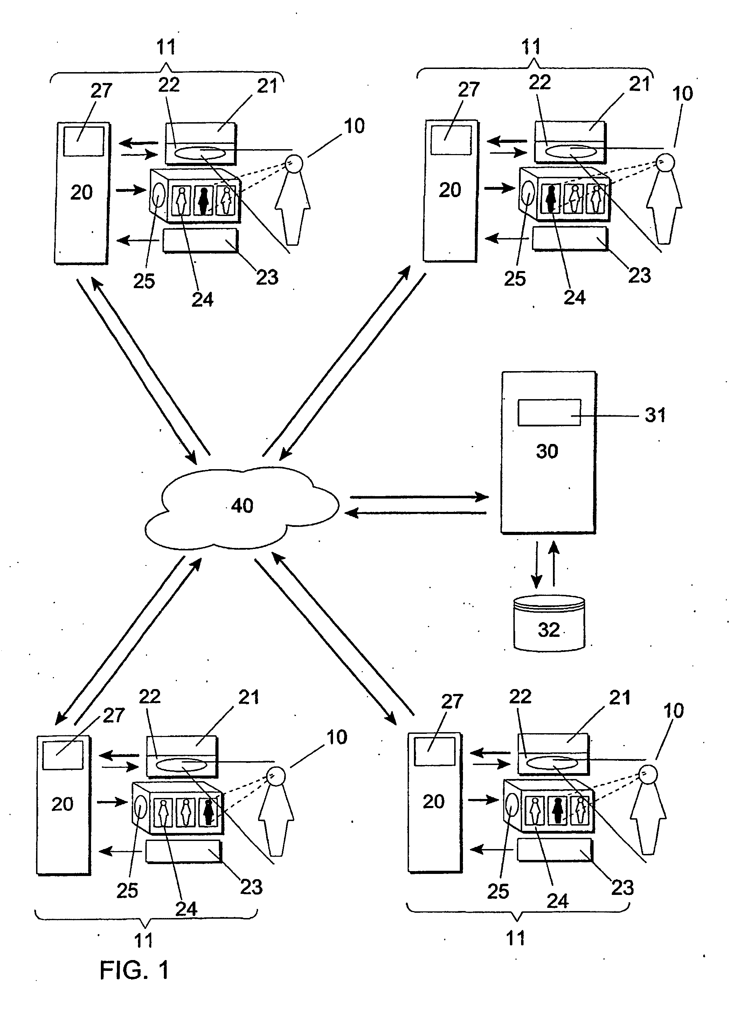

Figur 1 illustriert eine Architektur, die zur Realisierung der Erfindung verwendet werden kann. In diesem Ausführungsbeispiel kommunizieren mindestens drei verschiedene Videokonferenzteilnehmerstellen 11 miteinander, wobei Multimediadaten über ein Telekommunikationsnetz 40 übertragen werden, welche mindestens TeiInehmerbilddaten 22 und/oder Teilnehmertondaten 21 umfassen, und jeder der Teilnehmer 10 die Teilnehmerbilddaten der anderen Teilnehmer auf einem Wiedergabegerät 24 der betreffenden Videokonferenzteilnehmerstelle 11 gleichzeitig sichtbar angeordnet dargestellt erhält. Das Wiedergabegerät 24 kann beispielsweise ein Display oder ein VRD (Virtual Retinal Display) sein. Das Telekommunikationsnetz 40 kann beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Intemet, ein paketorientiertes Kommunikationsnetz oder ein anderes Kommunikationsnetz, insbesondere ein Mobilfunknetz umfassen. Das Mobilfunknetz kann z.B. ein GSM-, ein UMTS- oder ein anderes Mobilfunknetz sein. Die Kommunikation über das Mobilfunknetz 40 erfolgt beispielsweise über Protokolle wie GPRS (Generalized Packet Radio Service), WAP (Wireless Application Protokoll) oder UMTS (Universal Mobile Telecommunication System). Die Erfassung der Teilnehmerbilddaten erfolgt über ein Bilddateneingabemodul 22 und die Erfassung der Teilnehmertondaten erfolgt über ein Tondateneingabemodul 21. Das Bilddateneingabemodul 22 kann z.B. eine Videokamera, eine Scaneinheit beispielsweise basierend auf MEMS (Mikroelektromechanisches System) oder eine digitale Kamera umfassen. Beispiele für Teilnehmerbilddaten können Videobilder, Texte, Tabellen, Dias, Graphiken etc. sein. Das Tondateneingabemodul 21 kann z.B. ein oder mehrere Mikrophone, CD-ROM-Player oder andere Toneingabegeräte umfassen. Ein Eye Tracking System 23 registriert die Blickrichtung des jeweiligen Teilnehmers 10 und übermittelt Eye Tracking Daten, welche mindestens Angaben über die Blickrichtung umfassen, an eine Kommunikationseinheit 20 der betreffenden Videokonferenzteilnehmerstelle 11 (d.h. die Videokonferenzteilnehmerstelle des jeweiligen Teilnehmers). Das Eye Tracking System 23 kann z.B. ein Purkinje-Bild basierendes System umfassen, welches über die Reflexionsunterschiede zweier paralleler, am Augenhintergrund und an der Hornhaut reflektierter Lichtstrahlen die Blickrichtung des Teilnehmers 10 bestimmt, oder z.B. es kann ein System basierend auf einem Laserscanner umfassen, welcher über einen Laserstrahl und einen Referenzstrahl den Augenhintergrund abrastert und so die Blickrichtung des Teilnehmers 10 bestimmt oder ein anderes System zur Bestimmung der Blickrichtung des Teilnehmers 10, wie z.B. ein Eye Trackingsystem gemäss der Patentschrift WO94/09472. Teilnehmerbilddaten und Teilnehmertondaten werden von der Kommunikationseinheit 20 an eine Zentraleinheit 30 übermittelt. Die Übermittlung kann z.B. komprimiert und/oder verschlüsselt erfolgen. Die Zentraleinheit 30 besitzt ein Codingmodul 31, welches die Daten entgegennimmt und dekomprimiert und/oder entschlüsselt. Für die Komprimierung können verschiedenste Algorithmen des Standes der Technik wie z.B. Huffman-Codierung, 3:2 Pulldown etc., aber auch Kompressionsstandards wie z.B. MPEG (Moving Pictures Expert Group) der International Organisation for Standardisation (ISO) verwendet werden. Bei der Übermittlung von Daten von der Zentraleinheit 30 an eine Kommunikationseinheit 20 übernimmt das Codingmodul 31 ebenfalls die Komprimierung und/oder die Verschlüsselung der Daten für die Übermittlung. Die Kommunikationseinheiten 20 besitzen ebenfalls ein Codingmodul 27, welches die Komprimierung/Dekomprimierung sowie die Verschlüsselung/Entschlüsselung der Daten übernimmt. Zum Beispiel erzeugt eine Videokamera des Bilddateneingabemoduls 22 ein analoges Videosignal. Die Coding-Switch 279 wird von der Kommunikationseinheit 20 so gestellt, dass der Datenfluss über das Komprimier- und Verschlüsselungssystem 271 geleitet wird. Der Inputprozessor 273 nimmt das Videosignal, z.B. ein PAL-Signal mit 25 fps (Frames per Second) oder ein NTSC-Signal mit 29.97 fps, entgegen und digitalisiert sowie filtert das analoge Videosignal, um das unbearbeitete digitale Videosignal zu erzeugen. Bei z.B. digitaler Bilddatenerfassung entfällt der letzte Schritt. Die 25 Frames des PAL-Signal entsprechen 50 Felder, also 50 Felder pro Sekunde, während die 29.97 Frames des NTSC-Signal 59.94 Felder entsprechen, also 59.94 Felder pro Sekunde. Der Videodatenanalyser 274 erhält das digitale Videosignal vom Inputprozessor 273, welches beispielsweise von einem VSync Signal, einem Feldsynchronisationssignal, begleitet ist und erzeugt ein modifiziertes Videosignal für das Komprimiermodul 275. Die Modifikation des Signals findet in Echtzeit statt und erzeugt ein Outputsignal, das danach optimal komprimiert werden kann. U.a. entfernt der Videodatenanalyser 274 beispielsweise redundante Felder oder Frames im Videosignal und erzeugt die notwendige Informationen für z.B. Motion Compensated Prediction oder Discrete Cosine Transformation (DCT) wie sie z.B. auch im MPEG-Format verwendet wird. Falls Bildanalyse- und Formrekonstruktionsalgorithmen verwendet werden, können diese ebenfalls vom Videodatenanalyser ausgeführt werden. Dazu gehören insbesondere Gesichtsanalyse und -synthesetechniken, wie z.B. Feature Point Modeling. Dabei werden von einem vorgegebenen möglichst generellen Model (z.B. des Gesichts) sog. Feature Points definiert, wobei der Vektor dieser Feature Points die Form des Models, die Trajektorie, die Bewegung des Models und der Vektorraum dieser Vektoren die Bewegungsmöglichkeiten des Models beschreibt. Die Verformung des ursprünglichen generellen Models kann z.B. mit DFFD-Methoden (Dirichlet Free Form Deformation) berechnet werden. Die Facial Synthese sowie die Facial Animation können beispielsweise gemäss MPEG-4-Standard implementiert sein. Die modifizierten digitalen Videodaten werden vom Komprimiermodul 275 schliesslich komprimiert und falls notwendig verschlüsselt. Das komprimierte digitale Videosignal wird von der Kommunikationseinheit 20 über das Telekommunikationsnetz 40 übermittelt werden. Das Codingmodul 27 der Kommunikationseinheit 20 kann ebenfalls zum Entschlüsseln und Dekodieren von Daten verwendet werden, welche an die Kommunikationseinheit 20 übers Telekommunikationsnetz 40 übermittelt wurden. Die Coding-Switch 279 wird von der Kommunikationseinheit 20 in diesem Fall so gesetzt, dass die Funktionen des Dekomprimier- und Entschlüsselungssystems 272 aktiv sind. Das Decodiermodul 276 übernimmt die Videodaten von der Kommunikationseinheit 20, dekomprimiert sie und falls notwendig entschlüsselt sie. Ein Outputprozessor 277 führt, falls Formrekonstruktionsalgorithmen verwendet wurden, die Bildsynthese durch, berechnet das darzustellende Videobild und gibt es als Videosignal an ein Wiedergabemodul 278, z.B. eine Bildschirmkarte oder eine VRD Anzeigevorrichtung (Virtual Retinal Display), z.B. ein VRD-Anzeigevorrichtung gemäss der Patentschrift WO94/09472, weiter. Der Datentransfer der Teilnehmerbilddaten, welche übermittelt werden sollen, wird z.B. über ein Software- oder hardwaremässig implementiertes Transfermodul der Zentraleinheit 30 oder der Kommunikationseinheiten 20 eingeleitet und durchgeführt. Die Teilnehmerbilddaten und die Teilnehmertondaten werden in der Zentraleinheit in einem Datenspeicher 32 abgespeichert. Das Puffern oder Speichern der Daten kann über ein Datenstream, ein Datenpuffer, eine Datenbank oder andersweitig realisiert sein. Es werden jeweils die Teilnehmerbilddaten desjenigen Teilnehmers mit voller Auflösung und Bildübertragungsrate über das Telekommunikationsnetz 40 an die Kommunikationseinheit 20 einer Videokonferenzteilnehmerstelle 11 übermittelt, dessen Teilnehmerbilddaten auf dem Wiedergabegerät 24 der letztgenannten Videokonferenzteilnehmerstelle 11 in der momentanen Blickrichtung des betreffenden Teilnehmers 10 (d.h. des Teilnehmers 10, dessen Blickrichtung vom Eye Tracking System der Videokonferenzteilnehmerstelle registriert wurde) dargestellt werden, während die Teilnehmerbilddaten der übrigen Teilnehmer in reduzierter Auflösung und/oder reduzierter Bildübertragungsrate übermittelt werden. Beim Ausführungsbeispiel der Figur 1 übermitteln die Kommunikationseinheiten 20 die Teilnehmerbilddaten ihrer Teilnehmer 10 an die Zentraleinheit 30, wo sie in einem Datenspeicher 32 der Zentraleinheit 30 abgespeichert werden. Es besteht z.B. die Möglichkeit, dass zugleich die Eye Tracking Daten der jeweiligen Kommunikationseinheiten 20 übermittelt werden. Die Eye Tracking Daten können z.B. Richtungsangaben der Blickrichtung, Angaben zu den in Blickrichtung dargestellten Teilnehmerbilddaten etc. sein. In diesem Fall bestimmt die Zentraleinheit 30 für jeden Teilnehmer 10 gemäss den Angaben der Eye Tracking Daten bezüglich der Blickrichtung des betreffenden Teilnehmers 10 die Auflösung und/oder die Bildübertragungsrate der Teilnehmerbilddaten der anderen Teilnehmer und übermittelt sie in dieser Auflösung und/oder Bildübertragungsrate an die Kommunikationseinheiten 20 des betreffenden Teilnehmers 10. Das Codingmodul 31 der Zentraleinheit 30 führt ebenfalls die Reduktion der Auflösung der Teilnehmerbilddaten durch. Die Reduktion der Multimediadaten muss sich nicht unbedingt auf die Teilnehmerbilddaten beschränken, sondern kann auch anderen Multimediabilddaten des mit der Blickrichtung selektierten Kanals, beispielsweise die Teilnehmertondaten (z.B. mit MP3-Standard), betreffen. Eine andere Möglichkeit besteht darin, dass die Eye Tracking Daten von den Kommunikationseinheiten 20 nicht an die Zentraleinheit 30 übermittelt werden, sondern lediglich die Teilnehmerbilddaten. Die Zentraleinheit 30 speichert die Teilnehmerbilddaten in voller und reduzierter Auflösung in einem Datenspeicher 32 ab. Die Kommunikationseinheiten 20 können dann gemäss ihren Eye Tracking Daten auf die Teilnehmerbilddaten der anderen Teilnehmer 10 in der entsprechenden Auflösung und/oder Bildübertragungsrate in der Zentraleinheit 30 zugreifen. Die angeforderten Teilnehmerbilddaten werden von der Zentraleinheit 30 an die entsprechende Kommunikationseinheit 20 über das Telekommunikationsnetz 40 übermittelt.

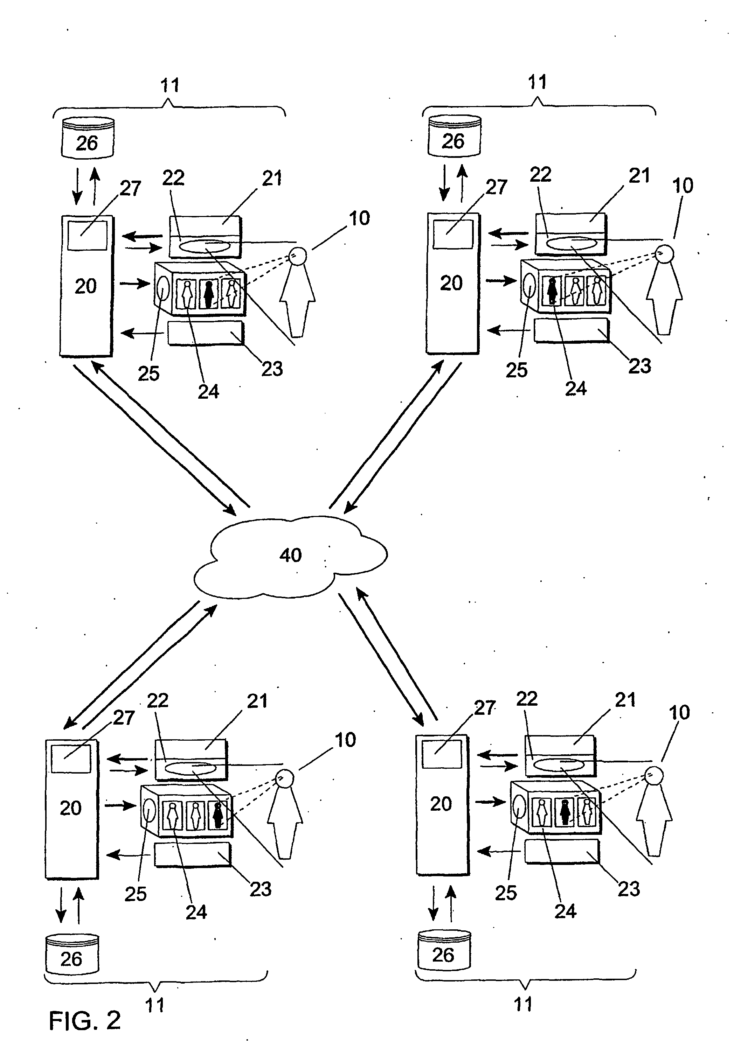

Figur 2 illustriert eine Architektur, die zur Realisierung der Erfindung verwendet werden kann. In diesem Ausführungsbeispiel kommunizieren mindestens drei verschiedene Videokonferenzteilnehmerstellen 11 über ein Videokonferenzsystem miteinander, wobei Multimediadaten über ein Telekommunikationsnetz 40 übertragen werden, welche mindestens Teilnehmerbilddaten 22 und/oder Teilnehmertondaten 21 umfassen, und jeder der Teilnehmer 10 die Teilnehmerbilddaten der anderen Teilnehmer auf einem Wiedergabegerät 24 der betreffenden Videokonferenzteilnehmerstelle 11 gleichzeitig sichtbar angeordnet dargestellt erhält. Das Wiedergabegerät 24 kann beispielsweise ein Display oder ein VRD (Virtual Retinal Display) sein. Wie im oberen Ausführungsbeispiel kann das Telekommunikationsnetz 40 beispielsweise ein Festnetz wie ein LAN (Local Area Network) oder WAN (Wide Area Network), das öffentliche geschaltete Telefonnetz (PSTN, Public Switched Telephone Network und/oder ISDN, (Integrated Services Digital Network), das Intemet oder ein anderes Kommunikationsnetz insbesondere ein Mobilfunknetz umfassen. Die Erfassung der Teilnehmerbilddaten erfolgt über ein Bilddateneingabemodul 22 und die Erfassung der Teilnehmertondaten erfolgt über ein Tondateneingabemodul 21. Das Bilddateneingabemodul 22 kann z.B. eine Videokamera, eine Scaneinheit oder eine digitale Kamera umfassen. Beispiel für Teilnehmerbilddaten können Videobilder, gescannte Fotos, Tabellen, Texte, Graphiken etc. sein. Das Tondateneingabemodul 21 kann z.B. ein oder mehrere Mikrophone, CD-ROM-Player oder andere Toneingabegeräte umfassen. Ein Eye Tracking System 23 registriert die Blickrichtung des jeweiligen Teilnehmers 10 und übermittelt Eye Tracking Daten, welche mindestens Angaben über die Blickrichtung umfassen, an eine Kommunikationseinheit 20 der betreffenden Videokonferenzteilnehmerstelle 11. Es können z.B. Eye Tracking Systeme wie im vorhergehenden Ausführungsbeispiel beschrieben, verwendet werden. Es werden jeweils die Teilnehmerbilddaten desjenigen Teilnehmers mit voller Auflösung und Bildübertragungsrate über das Telekommunikationsnetz 40 an die Kommunikationseinheit 20 einer Videokonferenzteilnehmerstelle 11 übermittelt, dessen Teilnehmerbilddaten auf dem Wiedergabegerät 24 der letztgenannten Videokonferenzteilnehmerstelle 11 in der momentanen Blickrichtung des betreffenden Teilnehmers 10 (d.h. des Teilnehmers 10, dessen Blickrichtung vom Eye Tracking System der Videokonferenzteilnehmerstelle registriert wurde) dargestellt werden, während die Teilnehmerbilddaten der übrigen Teilnehmer in reduzierter Auflösung und/oder reduzierter Bildübertragungsrate übermittelt werden. Die Reduktion der Multimediadaten muss sich nicht unbedingt auf die Teilnehmerbilddaten beschränken, sondern kann auch anderen Multimediabilddaten des mit der Blickrichtung selektierten Kanals, beispielsweise die Teilnehmertondaten (z.B. mit MP3-Standard), betreffen. Teilnehmerbilddaten und Teilnehmertondaten werden in diesem Ausführungsbeispiel jedoch nicht an eine Zentraleinheit 30 übermittelt, sondern in einem Datenspeicher 26 der jeweiligen Kommunikationseinheit 20 abgespeichert. Das Puffern oder Speichern der Daten kann über ein Datenstream, ein Datenpuffer, eine Datenbank oder andersweitig realisiert sein. Die Kommunikationseinheit 20 bestimmt anhand der Angaben der Eye Tracking Daten bezüglich der Blickrichtung des betreffenden Teilnehmers 10 die Auflösung und/oder die Bild-übertragungsraten der auf dem Wiedergabegerät 24 darzustellenden Teilnehmerbilddaten und fordert diese Teilnehmerbilddaten bei den Kommunikationseinheiten der anderen Teilnehmer an. Die angeforderten Teilnehmerbilddaten werden von den Kommunikationseinheiten 20 der anderen Teilnehmer in dieser Auflösung und/oder Bildübertragungsrate an die Kommunikationseinheit des betreffenden Teilnehmers 10 übermittelt. Das Ausführungsbeispiel besitzt ein Codingmodul 27 mit der gleichen Funktionalität wie im vorhergehenden Ausführungsbeispiel. So sind z.B. Kompression/Dekompression, Verschlüsselung/Entschlüsselung und/oder Bildsynthese mit Formrekonstruktionsalgorithmen wie oben beschrieben im Codingmodul 27 implementiert. Ebenso übernimmt das Codingmodul 27, falls notwendig, beispielsweise die Umwandlung der analogen Videodaten in digitale Videodaten und umgekehrt.

Für beide Ausführungsbeispiele ist es möglich, dass die Bildübertragungsrate für diejenigen Teilnehmerbilddaten, welche auf dem Wiedergabegerät 24 nicht in Blickrichtung des Teilnehmers 10 dargestellt werden, gleich Null gesetzt wird. Der Teilnehmer erhält dann auf dem Wiedergabegerät 24 nur die momentan betrachteten Teilnehmerbilddaten bewegt dargestellt, während die übrigen z.B. als Standbild unbewegt dargestellt werden. Das Standbild kann beispielsweise diejenigen Teilnehmerbilddaten umfassen, welche übermittelt wurden, als sie letztmals in der momentanen Blickrichtung des Teilnehmers 10 auf dem Wiedergabegerät 24 lagen. Es besteht aber auch die Möglichkeit z.B. irgendwelche anderen Bilddaten anstelle der vorgenannten als Standbild darzustellen, beispielsweise einfache synthetische Nachbildungen der Teilnehmerbilddaten. Eine andere Möglichkeit für die Teilnehmerbilddaten (sowohl die mit voller Auflösung als auch die mit reduzierter Auflösung übermittelten) ist, dass die Bewegung der Objekte der Teilnehmerbilddaten, also z.B. die Mundbewegung eines Teilnehmers, vollkommen synthetisch, d.h. durch Formrekonstruktions- und Animationsalgorithmen dargestellt werden. Es reicht dann beispielsweise nur ein Bild eines Teilnehmers zu übermitteln und die Bewegung dann zu simulieren. In einer Ausführungsvariante ist es z.B. auch vorstellbar, durch Motion Compensated Prediction die Bildübertragungsrate zu variieren. So z.B. wird bei grösseren Bewegungen die Bildübertragungsrate erhöht und der Anteil der Bilder mit vollständig animierter Bewegung nimmt ab, während bei kleineren Bewegungen die Bildübertragungsrate gesenkt wird und die Bewegung in den Teilnehmerbilddaten synthetisiert wird.

## Patentansprüche

1. Videokonferenzverfahren, bei welchem mindestens drei Teilnehmer über Videokonferenzteilnehmerstellen (11) eines Videokonferenzsystems miteinander kommunizieren, wobei Multimediadaten über ein Telekommunikationsnetz (40) übertragen werden, welche mindestens Teilnehmerbilddaten (22) und/oder Teilnehmertondaten (21) umfassen, und jeder der Teilnehmer (10) die Teilnehmerbilddaten der anderen Teilnehmer auf einem Wiedergabegerät (24) der betreffenden Videokonferenzteilnehmerstelle (11) gleichzeitig sichtbar angeordnet dargestellt erhält, **dadurch gekennzeichnet,**
**dass** die Blickrichtung der Teilnehmer (10) jeweils von einem Eye Tracking System (23) registriert und Eye Tracking Daten, die mindestens Angaben über die Blickrichtung umfassen, an eine Kommunikationseinheit (20) der betreffenden Videokonferenzteilnehmerstelle (11) übertragen werden, und
**dass** jeweils die Teilnehmerbilddaten desjenigen Teilnehmers mit voller Auflösung und Bildübertragungsrate über das Telekommunikationsnetz (40) an die Kommunikationseinheit (20) einer Videokonferenzteilnehmerstelle (11) übermittelt werden, dessen Teilnehmerbilddaten auf dem Wiedergabegerät (24) dieser letztgenannten Videokonferenzteilnehmerstelle (11) in der momentanen Blickrichtung des Teilnehmers (10) dieser Videokonferenzteilnehmerstelle (11) dargestellt werden, während die Teilnehmerbilddaten der übrigen Teilnehmer in reduzierter Auflösung und/oder reduzierter Bildübertragungsrate übermittelt werden.

2. Verfahren nach Anspruch 1, **dadurch gekennzeichnet, dass** die Bildübertragungsrate für diejenigen Teilnehmerbilddaten, welche nicht in der momentanen Blickrichtung des Teilnehmers (10) dargestellt werden, gleich Null ist.

3. Verfahren nach einem der Ansprüche 1 oder 2, **dadurch gekennzeichnet, dass** die Eye Tracking Daten sowie die Teilnehmerbilddaten an eine Zentraleinheit (30) übermittelt werden, wobei die Zentraleinheit (30) für jeden Teilnehmer (10) gemäss den Angaben der Eye Tracking Daten des betreffenden Teilnehmers (10) die Auflösung und/oder die Bildübertragungsrate der Teilnehmerbilddaten der anderen Teilnehmer bestimmt und die Teilnehmerbilddaten in dieser Auflösung und/oder Bildübertragungsrate an die Kommunikationseinheit (20) des betreffenden Teilnehmers (10) übermittelt.

4. Verfahren nach einem der Ansprüche 1 oder 2, dadurch gekenn-. zeichnet, dass die Teilnehmerbilddaten an eine Zentraleinheit (30) übermittelt werden und in einem Datenspeicher (32) der Zentraleinheit (30) abgespeichert werden, dass die Kommunikationseinheit (20) eines Teilnehmers (10) gemäss den Angaben der Eye Tracking Daten des betreffenden Teilnehmers (10) die Auflösung und/oder Bildübertragungsrate der Teilnehmerbilddaten der anderen Teilnehmer bestimmt und dass diese Teilnehmerbilddaten von der Zentraleinheit (30) in dieser Auflösung und/oder Bildübertragungsrate an die Kommunikationseinheit (20) des betreffenden Teilnehmers (10) übermittelt werden.

5. Verfahren nach einem der Ansprüche 1 oder 2, **dadurch gekennzeichnet, dass** die Teilnehmerbilddaten eines Teilnehmers (10) in einem Datenspeicher (26) der Kommunikationseinheit (20) dieses Teilnehmers (10) abgespeichert werden und die Kommunikationseinheit (20) gemäss den Angaben der Eye Tracking Daten diese Teilnehmers (10) die Auflösung und/oder die Bildübertragungsrate der. Teilnehmerbilddaten der anderen Teilnehmer bestimmt, wobei die letztgenannten Teilnehmerbilddaten von den Kommunikationseinheiten der anderen Teilnehmer in dieser Auflösung und/oder Bildübertragungsrate an die Kommunikationseinheit (20) des betreffenden Teilnehmers (10) übermittelt werden.

6. Verfahren nach einem der Ansprüche 1 bis 5, **dadurch gekennzeichnet, dass** mindestens eine Videokonferenzteilnehmerstelle (11) über ein Mobilfunknetz (40) mit dem Telekommunikationsnetz (40) verbunden ist.

7. Verfahren nach einem der Ansprüche 1 bis 6, **dadurch gekennzeichnet, dass** die Kommunikationseinheit (20) Bildanalyse- und Formrekonstruktionsalgorithmen verwendet, um die Teilnehmerbilddaten, welche mit reduzierter Auflösung übermittelt wurden, darzustellen.

8. Videokonferenzsystem, welches mindestens drei verschiedene Videokonferenzteilnehmerstellen (11) umfasst, welche über ein Telekommunikationsnetz (40) miteinander verbunden sind, wobei die Videokonferenzteilnehmerstellen (11) eine Kommunikationseinheit (20), ein Wiedergabegerät (24) zur gleichzeitig sichtbaren Darstellung von Teilnehmerbilddaten und ein Tonausgabemodul (25) zur Wiedergabe von Teilnehmertondaten sowie ein Bilddatenerfassungsmodul (22) zur Erfassung von Teilnehmerbilddaten und ein Tondatenerfassungsmodul (21) zur Erfassung von Teilnehmertondaten umfassen, **dadurch gekennzeichnet,**
**dass** die Videokonferenzteilnehmerstellen (11) ein Eye Tracking System (23) umfassen, mittels welchem die Blickrichtung des betreffenden Teilnehmers (10) registriert wird, und mittels welchem Eye Tracking Daten an die Kommunikationseinheit (20) übertragen werden, wobei die Eye Tracking Daten mindestens Angaben über die Blickrichtung des Teilnehmers (10) umfassen, und
**dass** das Videokonferenzsystem Mittel umfasst, welche jeweils die Teilnehmerbilddaten desjenigen Teilnehmers mit voller Auflösung und Bildübertragungsrate über das Telekommunikationsnetz (40) an die Kommunikationseinheit (20) einer Videokonferenzteilnehmerstelle (11) übermitteln, dessen Teilnehmerbilddaten auf dem Wiedergabegerät (24) dieser letztgenannten Videokonferenzteilnehmerstelle (11) in der momentanen Blickrichtung des Teilnehmers (10) dieser Videokonferenzteilnehmerstelle (11) dargestellt werden, und welche die Teilnehmerbilddaten der übrigen Teilnehmer in reduzierter Auflösung und/oder reduzierter Bildübertragungsrate übermitteln.

9. System nach Anspruch 8, **dadurch gekennzeichnet, dass** die Bildübertragungsrate für diejenigen Teilnehmerbilddaten, welche auf dem Wiedergabegerät (24) nicht in der momentanen Blickrichtung des Teilnehmers (10) dargestellt werden, gleich null ist.

10. System nach einem der Ansprüche 8 oder 9, **dadurch gekennzeichnet, dass** das Videokonferenzsystem eine Zentraleinheit (30) umfasst, welche Zentraleinheit (30) für jeden Teilnehmer gemäss den Angaben der Eye Tracking Daten des betreffenden Teilnehmers (10) die Auflösung und/oder Bildübertragungsrate der Teilnehmerbilddaten der anderen Teilnehmer bestimmt und die Teilnehmerbilddaten in dieser Auflösung und/oder Bildübertragungsrate an die Kommunikationseinheiten (20) des betreffenden Teilnehmers (10) übermittelt.

11. System nach einem der Ansprüche 8 oder 9, **dadurch gekennzeichnet, dass** das Videokonferenzsystem eine Zentraleinheit (30) mit Datenspeicher (32) umfasst, von welchem Datenspeicher (32) die Teilnehmerbilddaten der Teilnehmer von den Kommunikationseinheiten gemäss den Angaben der Eye Tracking Daten des betreffenden Teilnehmers (10) in voller oder reduzierter Auflösung sowie in voller oder reduzierter Bildübertragungsrate herunterladbar sind.

12. System nach einem der Ansprüche 8 oder 9, **dadurch gekennzeichnet, dass** die Kommunikationseinheit (20) eines Teilnehmers (10) eine Datenspeicher (26) umfasst, von welcher Datenspeicher (26) die Teilnehmerbilddaten des betreffenden Teilnehmers (10) von den Kommunikationseinheiten (20) gemäss den Angaben der Eye Tracking Daten des betreffenden Teilnehmers in voller oder reduzierter Auflösung und/oder in voller oder reduzierter Bildübertragungsrate herunterladbar sind.

13. System nach einem der Ansprüche 8 bis 12, **dadurch gekennzeichnet, dass** das Telekommunikationsnetz (40) ein Mobilfunknetz umfasst.

14. System nach einem der Ansprüche 8 bis 13, **dadurch gekennzeichnet, dass** die Kommunikationseinheit (20) ein Bildrekonstruktionsmodul umfasst, welches Bildanalyse- und Formrekonstruktionsalgorithmen verwendet, um die Teilnehmerbilddaten, welche mit reduzierter Auflösung übermittelt wurden, zu rekonstruieren.

## Revendications

1. Procédé de vidéoconférence, dans lequel au moins trois correspondants communiquent entre eux par l'intermédiaire de postes de vidéoconférence (11) d'un système de vidéoconférence, des données multimédia étant transmises par un réseau de télécommunication (40) lesquelles comprennent au moins des données d'image de correspondants (22) et/ou des données audio de correspondants (21) et chacun des correspondants (10) recevant simultanément de manière visible les données d'image des autres correspondants concernés (11) sur un appareil de reproduction du poste de vidéoconférence concerné (11), **caractérisé**
**en ce que** le sens du regard des correspondants (10) est enregistré respectivement par un Eye Tracking System (23) (système oculométrique) et des données oculométriques qui comprennent au moins des données sur la direction du regard, sont transmises à une unité de communication (20) des postes de vidéoconférence concernés (11), et
**en ce que** les données d'image du correspondant avec une résolution pleine et un débit intégral de transmission d'image sont transmises par le réseau de télécommunication (40) à l'unité de communication (20) d'un poste de vidéoconférence (11), dont les données d'image de correspondants sont représentées sur l'appareil de reproduction (24) de ce dernier poste de vidéoconférence cité (11) dans la direction momentanée de regard du correspondant (10) de ce poste de vidéoconférence (11) tandis que les données d'image des autres correspondants sont transmises en résolution réduite et/ou débit réduit de transmission d'image.

2. Procédé selon la revendication 1, **caractérisé en ce que** le débit de transmission de données pour les données d'image de correspondants qui ne sont pas représentées dans la direction momentanée du regard du correspondant (10), est égal à zéro.

3. Procédé selon l'une des revendications 1 ou 2, **caractérisé en ce que** les données oculométriques ainsi que les données d'image de correspondants sont transmises à une unité centrale (30), l'unité centrale (30) déterminant, pour chaque correspondant (10) d'après les indications des données oculométriques du correspondant considéré (10), la résolution et/ou le débit de transmission des images des autres correspondants et transmettant les données d'image de correspondants dans cette résolution et/ou ce débit de transmission à l'unité de communication (20) du correspondant concerné (10).

4. Procédé selon l'une des revendications 1 ou 2, **caractérisé en ce que** les données d'image de correspondants sont transmises à une unité centrale (30) et sont stockées dans une mémoire de données (32) de l'unité centrale (30), **en ce que** l'unité de communication (20) d'un correspondant (10) détermine en fonction des indications des données oculométriques des données d'image du correspondant concerné (10) la résolution et/ou le débit de transmission des données d'image des autres correspondants et **en ce que** les données d'image de correspondants sont transmises par l'unité centrale (30) dans cette résolution et/ou ce débit de transmission d'image à l'unité de communication (20) du correspondant concerné (10).

5. Procédé selon l'une des revendications 1 ou 2, **caractérisé en ce que** les données d'image d'un correspondant (10) sont stockées dans une mémoire de données (26) de l'unité de communication (20) de ce correspondant (10) et l'unité de communication (20) détermine d'après les indications des données oculométriques de ce correspondant (10) la résolution et/ou le débit de transmission des données d'image des autres correspondants, les dernières données d'image de correspondants citées étant transmises par les unités de communication des autres correspondants dans cette résolution et/ou à ce débit de transmission d'image à l'unité de communication (20) du correspondant considéré (10).

6. Procédé selon l'une des revendications 1 à 5, **caractérisé en ce qu'**au moins un poste de vidéoconférence (11) est relié par un réseau radio mobile (40) avec le réseau de télécommunication (40).

7. Procédé selon l'une des revendications 1 à 6, **caractérisé en ce que** l'unité de communication (20) utilise des algorithmes d'analyse d'image et de reconstitution de forme pour représenter les données d'image de correspondants qui ont été transmises à une résolution réduite.

8. Système de vidéoconférence, qui comprend au moins trois postes de vidéoconférence différents (11) qui sont reliés entre eux par un réseau de télécommunication (40), les postes de vidéoconférence (11) comprenant une unité de communication (20), un appareil de reproduction (24) pour la représentation simultanément visible de données d'image de correspondants et un module d'émission sonore (25) pour la reproduction de données audio de correspondants ainsi qu'un module de saisie de données d'image (22) pour la saisie de données d'image de correspondants et un module de saisie de données audio (21) pour la saisie de données audio de correspondants, **caractérisé en**
**en ce que** les postes de vidéoconférence (11) comprennent un système oculométrique (23) au moyen duquel est enregistrée la direction du regard du correspondant considéré (10), et au moyen duquel des données oculométriques sont transmises à l'unité de communication, les données oculométriques comprenant au moins des données sur la direction du regard du correspondant (10) et
en ce que le système de vidéoconférence comprend des moyens qui transmettent respectivement les données d'image du correspondant à pleine résolution et à plein débit de transmission d'image par l'intermédiaire du réseau de télécommunication (40) à l'unité de communication (20) d'un poste de vidéoconférence (11), dont les données d'image de correspondants sont représentées sur l'appareil de reproduction (24) de ce poste de vidéoconférence cité en dernier (11) dans la direction de regard momentanée du correspondant (10) de ce poste de vidéoconférence (11), et qui transmet les données d'images des autres correspondants à résolution réduite et/ou à un débit réduit de transmission d'image.

9. Système selon la revendication 8, **caractérisé en ce que** les débits de transmission d'image pour les données d'image de correspondants, qui ne sont pas représentées sur l'appareil de reproduction (24) dans la direction de regard momentanée du correspondant (10), est égale à zéro.

10. Système selon l'une des revendications 8 ou 9, **caractérisé en ce que** le système de vidéoconférence comprend une unité centrale (30), unité centrale (30) qui détermine pour chaque correspondant d'après les indications des données oculométriques du correspondant concerné (10), la résolution et/ou le débit de transmission des données d'image des autres correspondants et transmet les données d'image de correspondants dans cette résolution et/ou à ce débit de transmission d'image aux unités de communication (20) du correspondant considéré (10).

11. Système selon l'une des revendications 8 ou 9, **caractérisé en ce que** le système de vidéoconférence comprend une unité centrale (30) avec une mémoire de données (32), mémoire de données (32) depuis laquelle les données d'image des correspondants peuvent être téléchargées par les unités de télécommunication d'après les indications de données oculométriques du correspondant considéré à résolution pleine ou réduite et à débit plein ou réduit de transmission d'image.

12. Système selon l'une des revendications 8 ou 9, **caractérisé en ce que** l'unité de communication (20) d'un correspondant (10) comprend une mémoire de données (26) depuis laquelle les données d'image du correspondant considéré peuvent être téléchargées par les unités de télécommunication (20) d'après les indications de données oculométriques du correspondant considéré à résolution pleine ou réduite et à débit plein ou réduit de transmission d'image.

13. Système selon l'une des revendications 8 à 13, **caractérisé en ce que** le réseau de télécommunication (40) comprend un réseau radio mobile.

14. Système selon l'une des revendications 8 à 12, **caractérisé en ce que** l'unité de télécommunication (20) comprend un module de reconstruction d'image qui utilise des algorithmes d'analyse d'image et de reconstitution de forme pour représenter les données d'image de correspondants qui ont été transmises à une résolution réduite.

## Claims

1. Video conferencing method in which at least three participants communicate with one another via video conference participant stations (11) of a video conference system, multimedia data being transmitted over a telecommunications network (40) comprising at least participant image data (22) and/or participant audio data (21), and each of the participants (10) receiving the participant image data from the other participants shown at the same time visually arranged on a reproduction device (24) of the respective video conference participant station (11), **characterised**
**in that** the direction of view of the participants (10) is registered in each case by an eye tracking system (23), and eye tracking data comprising at least data about the direction of view are transmitted to a communications unit (20) of the respective video conference participant station (11), and
**in that** transmitted with full resolution and video transmission rate in each case over the telecommunications network (40) to the communications unit (20) of a video conference participation station (11) are the participant image data of that participant whose participant image data are shown on the reproduction device (24) of this last-mentioned video conference participant station (11) in the momentary direction of view of the participant (10) of this video conference participant station (11), while the participant image data of the remaining participants are transmitted in reduced resolution and/or at reduced video transmission rate.

2. Method according to claim 1, **characterised in that** the video transmission rate is zero for those participant image data that are not shown in the momentary direction of view of the participant (10).

3. Method according to one of the claims 1 or 2, **characterised in that** the eye tracking data as well as the participant image data are transmitted to a central unit (30), the central unit (30) determining, according to the indications of the eye tracking data of the respective participant (10), the resolution and/or video transmission rate of the participant image data of the other participants and transmitting the participant image data in this resolution and/or at this video transmission rate to the communications unit (20) of the respective participant (10).

4. Method according to one of the claims 1 or 2, **characterised in that** the participant image data are transmitted to a central unit (30) and are stored in a data store (32) of the central unit (30), **in that**, depending upon indications of the eye tracking data of the respective participant (10), the communications unit (20) of a participant (10) determines the resolution and/or video transmission rate of the participant image data of the other participants, and **in that** these participant image data are transmitted by the central unit (30) in this resolution and/or at this video transmission rate to the communications unit (20) of the respective participant (10).

5. Method according to one of the claims 1 or 2, **characterised in that** the participant image data for a participant (10) are stored in a data store (26) of the communications unit (20) of this participant (10), and the communications unit (20) determines, according to indications of the eye tracking data of this participant, the resolution and/or the video transmission rate of the participant image data of the other participants, the last-mentioned participant image data being transmitted in this resolution and/or at this video transmission rate to the communications unit (20) of the respective participant (10) by the communications units of the other participants.

6. Method according to one of the claims 1 to 5, **characterised in that** at least one video conference participant (11) is connected to the telecommunications network (40) via a mobile radio network (40).

7. Method according to one of the claims 1 to 6, **characterised in that** the communications unit (20) uses picture analysis and form reconstruction algorithms to portray the participant image data that have been transmitted with reduced resolution.

8. Video conference system comprising at least three different video conference participant stations (11), which are connected to one another via a telecommunications network (40), the video conference participant stations (11) comprising a communications unit (20), a reproduction device (24) for simultaneously visible presentation of the participant image data and a sound emitting module (25) for reproduction of participant audio data as well as an image data capturing module (22) for capturing participant image data and an audio data capturing module (21) for capturing participant audio data, **characterised**
**in that** the video conference participant stations (11) comprise an eye tracking system (23), by means of which the direction of view of the respective participant (10) is registered, and by means of which eye tracking system eye tracking data are transmitted to the communications unit (20), the eye tracking data comprising at least data on the direction of view of the participant (10), and
**in that** the video conference system comprises means which transmit over the telecommunications network (40) to the communications unit (20) of a video conference participation station (11) with full resolution and video transmission rate in each case the participant image data of that participant whose participant image data are shown on the reproduction device (24) of this last-mentioned video conference participant station (11) in the momentary direction of view of the participant (10) of this video conference participant station (11), and which transmit the participant image data of the other participants in reduced resolution and/or at reduced video transmission rate.

9. System according to claim 8, **characterised in that** the video transmission rate is zero for those participant image data that are not shown in the momentary direction of view of the participant (10).

10. System according to one of the claims 8 or 9, **characterised in that** the video conference system comprises a central unit (30), which central unit (30) determines for each participant according to the indications of the eye tracking data of the respective participant (10) the resolution and/or video transmission rate of the participant image data of the other participants, and transmits the participant image data in this resolution and/or at this video transmission rate to the communications units (20) *<sic. communication unit (20)*> of the respective participant (10).

11. System according to one of the claims 8 or 9, **characterised in that** the video conference system comprises a central unit (30) with data store (32) from which data store (32) the participant image data of the participants are downloadable by the communications units according to indications of the eye tracking data of the respective participant (10) in full or reduced resolution as well as at full or reduced video transmission rate.

12. System according to one of the claims 8 or 9, **characterised in that** the communications unit (20) of a participant (10) comprises a data store (26) from which data store (26) the participant image data of the respective participant (10) are downloadable by the communications units (20) according to the indications of the eye tracking data of the respective participant in full or reduced resolution and/or at full or reduced video transmission rate.

13. System according to one of the claims 8 to 12, **characterised in that** the telecommunications network (40) comprises a mobile radio network.

14. System according to one of the claims 8 to 13, **characterised in that** the communications unit (20) comprises a picture reconstruction module that uses picture analysis and form reconstruction algorithms to reconstruct the participant image data that have been transmitted with reduced resolution.
